Europäisches Patentamt

European Patent Office

Office européen des brevets

(19)

(11) Veröffentlichungsnummer : **0 358 933 B1**

## (12) EUROPÄISCHE PATENTSCHRIFT

(45) Veröffentlichungstag der Patentschrift :
**11.11.92 Patentblatt 92/46**

(21) Anmeldenummer : **89114515.3**

(22) Anmeldetag : **05.08.89**

(51) Int. Cl.⁵ : **C03C 8/06,** C23D 5/00

(54) **Emailfritten für säurefeste Einschichtemaillierungen auf ungebeizten Stählen.**

(30) Priorität : **13.09.88 DE 3831153**

(43) Veröffentlichungstag der Anmeldung :
**21.03.90 Patentblatt 90/12**

(45) Bekanntmachung des Hinweises auf die
Patenterteilung :
**11.11.92 Patentblatt 92/46**

(84) Benannte Vertragsstaaten :
**AT BE CH DE ES FR GB GR IT LI NL SE**

(56) Entgegenhaltungen :
**DE-A- 3 710 608**

(56) Entgegenhaltungen :
US-A- 2 930 713
US-A- 3 383 225
**CHEMICAL ABSTRACTS, vol. 83, no. 14, 06
Oktober 1975 Columbus, Ohio, USA Seite 381;
ref. no. 120111X & SU-A-467045(KHOMRACH
ET AL.) (15-04-1975)**

(73) Patentinhaber : **BAYER AG
W-5090 Leverkusen 1 Bayerwerk (DE)**

(72) Erfinder : **Schittenhelm, Hans-Joachim, Dr.
Walter-Flex-Strasse 6
W-5090 Leverkusen 1 (DE)**
Erfinder : **Joseph, Werner, Dr.
Ludwig-Aschoff-Strasse 20
W-5000 Köln 80 (DE)**

EP 0 358 933 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Emailfritten, mit denen auf Stahlsubstraten, die weder gebeizt noch vernickelt sind, in einer Schicht säurefeste Emaillierungen mit sehr guter Haftung zu erzielen sind.

Aus der europäischen Patentanmeldung 0,284,934 sind Grundemailfritten mit hohen Borgehalten bekannt. Die Mengen von Silizium und Titan sind etwa gleich den Mengen an Bor und Aluminium. Als Haftoxid wird Nickeloxid in Mengen von >3 Gew.-% eingeschmolzen, gegebenenfalls zusammen mit Kobaltoxid ($\sim$1 Gew.-%). Diese Grundemailfritten zeigen auf ungebeizten Stählen eine ausgezeichnete Haftung, sind jedoch wenig säurefest (Säureklasse C bis D nach DIN 51 150). Um säureresistente Emaillierungen zu erhalten, muß zusätzlich in zweiter Schicht eine Deckemailfritte der Säureklasse AA nach DIN 51 150 aufgebracht werden.

Die Verwendung von gut haftenden und gleichzeitig säurefesten Emaillierungen in einer Schicht, wie sie in Steklo i. Keram. (1981) 6, S. 28 (R.J. Nikitina et al.) beschrieben sind, setzt wiederum voraus, daß der Stahl, auf dem emailliert wird, vorher gebeizt und/oder vernickelt wird.

Sowohl die Emaillierung auf ungebeizten Stählen mit einer Grund- und einer Deckemailfritte, als auch die Emaillierung auf gebeizten, vernickelten Stählen mit nur einer Fritte haben ökonomische und ökologische Nachteile. Die beheizten Beiz- und Spülbäder verbrauchen sehr viel Energie. Darüber hinaus müssen die verbrauchten Beizflüssigkeiten, das Nickelbad sowie die belasteten Spülflüssigkeiten aufbereitet und entsorgt werden. Die Zweischichtemaillierung erfordert zusätzliches Frittenmaterial sowie weitere Arbeitsgänge gegenüber der Einschichtemaillierung.

Aufgabe war es daher, Emailfritten zur Verfügung zu stellen, die sowohl säurefest (Säureklasse AA) sind, als auch auf ungebeizten, nicht vernickelten Stählen sehr gut haften, also in ihren Eigenschaften den Deckemailfritten für die Zweischichtemaillierung vergleichbar sind, jedoch den Vorteil haben, auf ungebeizten Stählen gut zu haften, so daß auf die übliche Grundemaillierung verzichtet werden kann.

Es wurde nun überraschend gefunden, daß die erfindungsgemäßen Emailfritten die obengenannten Vorteile aufweisen.

Diese Emailfritten haben folgende Zusammensetzung:

| | | | | |
|---|---|---|---|---|
| $SiO_2$ | 25 | bis | 65 | Gew.-% |
| $B_2O_3$ | 5 | bis | 30 | Gew.-% |
| $Na_2O$ | 5 | bis | 25 | Gew.-% |
| $Li_2O$ | 2,5 | bis | 10 | Gew.-% |
| F | 0,3 | bis | 4 | Gew.-% |
| CoO | 1,5 | bis | 2,5 | Gew.-% |
| $K_2O$ | 0 | bis | 12 | Gew.-% |
| MgO | 0 | bis | 2 | Gew.-% |
| CaO | 0 | bis | 16 | Gew.-% |
| BaO | 0 | bis | 26 | Gew.-% |
| $Al_2O_3$ | 0 | bis | 10 | Gew.-% |
| $TiO_2$ | 0 | bis | 14 | Gew.-% |
| $ZrO_2$ | 0 | bis | 16 | Gew.-% |
| NiO | 0 | bis | 3 | Gew.-% |
| CuO | 0 | bis | 3 | Gew.-% |
| MnO | 0 | bis | 3 | Gew.-% |
| $Fe_2O_3$ | 0 | bis | 3 | Gew.-% |
| $MoO_3$ | 0 | bis | 1 | Gew.-% |
| ZnO | 0 | bis | 3 | Gew.-% |

wobei $\geqq$40 % Siliziumatome, $\geqq$50 % Silizium- und Boratome, wobei der Anteil der Boratome 6,5 % nicht unterschreiten soll, $\geqq$63 % Silizium-, Bor- und Natriumatome, wobei der Anteil der Natriumatome 7,5 % nicht unterschreiten soll, vorliegen, jeweils bezogen auf die Gesamtsumme der Nicht-Sauerstoffatome der Fritte, so daß der Anteil der übrigen Nicht-Sauerstoffatome $\leqq$ 37 % ist, und 1,0 bis 1,2 % Kobaltatome sowie x Fluoratome mit 1 % $\leqq$ x $\leqq$ 11 % und wenigstens y Lithiumatome und höchstens 2 y Lithiumatome

mit y = $\dfrac{15}{x}$ + 5 vorliegen,

wobei der Anteil an Lithiumatomen größer als 6,3 % und kleiner oder gleich 20 % ist, jeweils bezogen auf die Gesamtsumme der Nicht-Sauerstoffatome der Fritte.

Weitere erfindungsgemäße Fritten mit der obengenannten Zusammensetzung enthalten $\geqq$40 % Silizium-atome, $\geqq$ 50 % Silizium- und Boratome, wobei der Anteil der Boratome 6,5 % nicht unterschreiten soll, $\geqq$ 63 % Silizium-, Bor- und Natriumatome, wobei der Anteil der Natriumatome 7,5 % nicht unterschreiten soll, jeweils bezogen auf die Gesamtsumme der Nicht-Sauerstoffatome der Fritte, so daß der Anteil der übrigen Nicht-Sauerstoffatome $\leqq$37 % ist, und 1,0 bis 1,2 % Kobaltatome sowie y Lithiumatome mit 6,3 % < y $\leqq$ 20 % und wenigstens x Fluoratome und höchstens 2x Fluoratome mit x = 15/(y-5), wobei der Anteil an Fluoratomen größer oder gleich 1 % und kleiner oder gleich 11 % ist, jeweils bezogen auf die Gesamtsumme der Nicht-Sauerstoffatome der Fritte.

Zur Herstellung festhaftender, säurefester Einschichtemaillierungen auf ungebeizten Stählen werden die erfindungsgemäßen Emailfritten verwendet und in Gegenwart eines Hydrogen-Polysiloxans vermahlen, als Frittenpulver elektrostatisch auf ungebeizte Stahlsubstrate aufgetragen und bei Temperaturen zwischen 790° und 860°C gebrannt.

Ein zweites Verfahren zur Herstellung säurefester Einschichtemaillierungen mit guter Haftung auf ungebeizten Stählen besteht darin, die erfindungsgemäßen Emailfritten zu verwenden und in Gegenwart von Wasser, Ton, Stellsalzen und Quarz zu vermahlen, im klassischen Naßverfahren auf die ungebeizten Stahlsubstrate aufzutragen und bei Temperaturen oberhalb von 830°C zu brennen.

Die erfindungsgemäßen Emailfritten können für regenerative Wärmetauscher verwendet werden und für Gefäße, die in Kontakt mit Säuren kommen.

Besonders wichtig für die erfindungsgemäßen Emailfritten ist der Anteil der Fluor- und Lithiumatome und deren Atomverhältnis zueinander. Gibt man einen Fluorwert in den beanspruchten Bereichen vor, so kann der Lithiumwert nicht mehr frei gewählt werden. Zwar ergeben beispielsweise Emailfritten mit F-Anteilen größer 11 % oder Li-Anteilen größer als 20 % ebenfalls sehr gute Haftung, führen aber zu fehlerhaften Emaillierungen (Poren, Durchschüsse oder Nadelstiche in der Emailschicht). Darüber hinaus geht die Säurebeständigkeit verloren.

Wird hingegen z.B. der Fluorwert innerhalb der erfindungsgemäßen Grenzen vorgegeben und der Lithiumwert dann so gewählt, daß er nicht mehr die vorgegebene Gleichung erfüllt, dann erhält man Emaillierungen mit schlechter Haftung, auch wenn alle anderen Bedingungen der erfindungsgemäßen Zusammensetzung erfüllt sind.

Wird der Gehalt an Co über den erfindungsgemäßen Wert von 1,2 % hinaus erhöht, so verschlechtert sich ebenfalls das Haftprofil.

Die Atomzahlen sind analog der Ermittlung einer chemischen Formel nach Analyse leicht zu errechnen, indem man den oxidischen Versatz in Gew.-% durch die entsprechenden Mol-Gewichte dividiert und in ein möglichst ganzzahliges Verhältnis zueinander setzt. Die Prozentangaben beziehen sich auf Atome, ausgenommen Sauerstoffatome der Emailfritte.

Die Erfindung soll anhand von speziellen Ausführungsbeispielen sowie Vergleichsbeispielen näher erläutert werden.

Für eine handelsübliche säurefeste Emailfritte für Stähle ergeben sich die Atomzahlen der Nicht-Sauerstoffatome z.B. zu 4601 Siliziumatomen, 384 Titanatomen, 1146 Boratomen, 79 Aluminiumatomen, 425 Calciumatomen, 112 Bariumatomen, 1418 Na-Atomen, 1162 Lithiumatomen, 269 K-Atomen, 155 F-Atomen, 45 Co-Atomen, 72 Ni-Atomen, 61 Cu-Atomen und 71 Mn-Atomen. Diese Atomzahlen errechnen sich analog einer chemischen Formel, indem man die Gewichtsprozente der oxidischen Bestandteile sowie des Fluors der Emailfritte durch die entsprechenden Mol-Gewichte dividiert und das Zahlenverhältnis so darstellt, daß die Summe dieser Atomzahlen 10.000 ergibt.

Aus den obengenannten Atomzahlen der handelsüblichen Fritte ergibt sich, daß die Summe der Nicht-Sauerstoffatome zu 46 % aus Si-Atomen, zu 57 % aus Si- und B-Atomen, zu 72 % aus Si-, B- und Na-Atomen, zu 0,45 % aus Co-Atomen, zu 11,62 % aus Li-Atomen und zu 1,55 % aus F-Atomen besteht. Damit liegt die Fritte außerhalb des beanspruchten Bereichs. Auf ungebeizten Stählen ergibt diese Fritte unzureichende Haftung.

Zur Beurteilung der Haftungseigenschaften wurde die handelsübliche Emailfritte, wie in der deutschen Patentschrift 2 015 072 beschrieben, als Pulver im elektrischen Feld auf 1 mm dicke Stahlblechstreifen von 45 cm Länge und 6 cm Breite aufgebracht. Die Streifen waren entfettet, jedoch nicht gebeizt. Das Aufschmelzen der Beschichtung geschah in einem Temperaturgradientenofen während 10 Minuten im Temperaturbereich von 750 bis 900°C. Die Schichtstärke der so eingebrannten Emailfritte liegt zwischen 0,14 und 0,18 mm. Die Haftungsprüfung erfolgte an den Stellen, an denen die Einbrenntemperatur 790°C, 810°C, 830°C und 860°C betragen hatte. Entsprechend DEZ-Merkblatt F 6.2 wurde die Haftungsprüfung mit einem Schlaggerät unter Verformung des Stahlbleches durchgeführt und bewertet (1 = sehr gut, 2 = gut, 3 = akzeptabel, 4 = ungenügend, 5 = keine Haftung). Für die obengenannte handelsübliche Emailfritte wurde bei 790°C keine Haftung, bei 810°C ungenügende, bei 830°C akzeptable und bei 860°C ungenügende Haftung festgestellt.

Demgegenüber zeigen Emaillierungen mit den erfindungsgemäßen Emailfritten sehr gute Haftung auf ungebeiztem Stahl, und außerdem sind sie säurefest. Die in den Beispielen 1 bis 4 aufgeführten Emailfritten ergeben Emaillierungen, bei denen die Haftung bei allen vier Einbrenntemperaturen (790°C, 810°C, 830°C, 860°C) sehr gut ist.

| Elemente | Atomzahlen | | | |
|---|---|---|---|---|
| | Beisp.1 | Beisp.2 | Beisp.3 | Beisp.4 |
| Si | 4365 | 4308 | 4620 | 4172 |
| Ti | 370 | 367 | 294 | 300 |
| B | 1103 | 1094 | 1270 | 1167 |
| Al | 76 | 75 | 19 | – |
| Ca | 409 | 406 | 153 | 142 |
| Ba | 108 | 107 | 104 | – |
| Na | 1365 | 1353 | 1592 | 1593 |
| Li | 1485 | 1162 | 810 | 1260 |
| K | 259 | 257 | 165 | 144 |
| F | 155 | 568 | 520 | 961 |
| Co | 109 | 108 | 103 | 109 |
| Ni | 69 | 69 | 77 | 74 |
| Cu | 59 | 58 | 66 | – |
| Mn | 68 | 68 | 75 | 67 |
| Fe | – | – | 132 | 11 |
| $\sum$Elemente | 10000 | 10000 | 10000 | 10000 |

| | Beisp.1 | Beisp.2 | Beisp.3 | Beisp.4 |
|---|---|---|---|---|
| $\sum$Si | 44 % | 43 % | 46 % | 42 % |
| $\sum$Si+B | 55 % | 54 % | 59 % | 54 % |
| $\sum$Si+B+Na | 69 % | 68 % | 75 % | 70 % |
| $\sum$Co | 1,09 % | 1,08 % | 1,03 % | 1,09 % |
| $\sum$F | 1,55 % | 5,68 % | 5,20 % | 9,61 % |
| $\sum$Li | 14,85 % | 11,62 % | 8,10 % | 12,60 % |

Die erfindungsgemäßen Emailfritten der Beispiele 1, 2, 3 und 4 wurden aus handelsüblichen Emailrohstoffen wie Quarzmehl, Borax, Alkali- und Erdalkalikarbonaten, Feldspat, Titandioxid, Alkalifluorosilikaten sowie den entsprechenden Schwermetalloxiden bei 1220°C "Fadenglatt" erschmolzen und über wassergekühlten Stahlwalzen abgeschreckt.

Die so erhaltenen Flakes wurden als Pulver elektrostatisch und als Schlicker durch Spritzen auf ungebeizte Stahlsubstrate von 45 cm Länge, 6 cm Breite und 0,1 cm Dicke aufgebracht und in einem Gradientenofen im Temperaturbereich von 750° bis 900°C 10 Minuten lang eingebrannt.

Für den Pulverauftrag wurden in einer Porzellankugelmühle 100 g Emailflakes und 0,4 g Methyl-Wasserstoff-Siloxan solange vermahlen, bis der Rückstand des Pulvers auf dem 16900 Maschensieb (Maschenweite 40 µm) weniger als 20 Gew.-% betrug. Das Pulver, das einen Oberflächenwiderstand von mehr als $10^{13}$ $\Omega$ aufwies, wurde mit einer Elektrostatikpistole unter Anlegen von 70 kV Spannung in einer Menge von 14 g (entsprechend 5,2 g/dm$^2$) in gleichmäßiger Schicht auf die Stahlsubstrate aufgebracht. Nach dem Einbrand ergab die Haftungsprüfung mit dem Fallgerät bei allen Beispielen sehr gute Haftung über den gesamten Temperaturbereich.

Für den Schlickerauftrag wurden 1 kg Emailflakes in einer mit 3,5 kg Schwermahlkugeln gefüllten Kugelmühle nach folgendem Mühlenversatz zu einem Schlicker vermahlen:

|  | Gew.-% |
|---|---|
| Emailfritte | 100 |
| Ton | 4,5 |
| Borsäure | 0,2 |
| Natriumnitrit | 0,2 |
| Kaliumsilikathydrat | 0,1 bis 0,3 |
| Natriumaluminat | 0,1 |
| Wasser | 50 |
| Mahlfeinheit | 0,5 bis 1,0 % Rückstand auf 3600 Maschensieb |
| Dichte | 1,73 g/ml |

Von diesem Schlicker wurde auf die ungebeizten Stahlsubstrate durch Spritzen so viel aufgebracht, daß sich nach dem Einbrennen eine Emailschichtstärke von 0,15 mm ergab. Nach dem Trocknen wurden die beschichteten Stahlsubstrate oberhalb 830°C eingebrannt. Die Haftungsprüfung mit dem Fallgerät ergab bei allen Beispielen sehr gute Haftung.

Die Emaillierungen der Beispiele 1 bis 4 wurden auf ihre Säurebeständigkeit hin überprüft. Die genaue Durchführung ist in der Vorschrift DIN 51 150 enthalten. Die Klassifizierung nach abfallender Beständigkeit geschieht visuell. Sie erfolgt nach 15 Minuten dauernder Einwirkung einer 10 %igen Lösung von Zitronensäure in Wasser bei Zimmertemperatur. Die Beispiele 1 bis 4 ergaben die bestmögliche Säureklasse (AA).

Die Beispiele 1 bis 4 wurden weiterhin einem Schwefelsäuretest unterzogen. Als Prüflinge dienten 10 x 10 cm große 4 Minuten bei 830°C eingebrannte Stahlsubstrate. Diese wurden einem zweistündigen Kontakt mit 1 %iger 95°C heißer Schwefelsäure unterworfen. Der Abtrag war kleiner als 2 g/m$^2$.

**Patentansprüche**

1. Emailfritten mit folgender Zusammensetzung:

| | | | | |
|---|---|---|---|---|
| $SiO_2$ | 25 | bis | 65 | Gew.-% |
| $B_2O_3$ | 5 | bis | 30 | Gew.-% |
| $Na_2O$ | 5 | bis | 25 | Gew.-% |
| $Li_2O$ | 2,5 | bis | 10 | Gew.-% |
| F | 0,3 | bis | 4 | Gew.-% |
| CoO | 1,5 | bis | 2,5 | Gew.-% |
| $K_2O$ | 0 | bis | 12 | Gew.-% |
| MgO | 0 | bis | 2 | Gew.-% |
| CaO | 0 | bis | 16 | Gew.-% |
| BaO | 0 | bis | 26 | Gew.-% |
| $Al_2O_3$ | 0 | bis | 10 | Gew.-% |
| $TiO_2$ | 0 | bis | 14 | Gew.-% |
| $ZrO_2$ | 0 | bis | 16 | Gew.-% |
| NiO | 0 | bis | 3 | Gew.-% |
| CuO | 0 | bis | 3 | Gew.-% |
| MnO | 0 | bis | 3 | Gew.-% |
| $Fe_2O_3$ | 0 | bis | 3 | Gew.-% |
| $MoO_3$ | 0 | bis | 1 | Gew.-% |
| ZnO | 0 | bis | 3 | Gew.-% |

dadurch gekennzeichnet, daß die Fritten 40 % und mehr Siliziumatome, 50 % und mehr Silizium- und Boratome, wobei der Anteil der Boratome 6,5 % nicht unterschreiten soll, 63 % und mehr Silizium-, Bor- und Natriumatome, wobei der Anteil der Natriumatome 7,5 % nicht unterschreiten soll, jeweils bezogen auf die Gesamtsumme der Nicht-Sauerstoffatome der Fritte, enthalten, der Anteil der übrigen Nicht- Sauerstoffatome 37 % und weniger ist, wobei 1,0 bis 1,2 % Kobaltatome sowie x Fluoratome mit $1\ \% \leqq x \leqq 11$ % und wenigstens y Lithiumatome und höchstens 2y Lithiumatome mit y = (15/x) + 5, wobei der Anteil an Lithiumatomen größer als 6,3 % und kleiner oder gleich 20 % ist, jeweils bezogen auf die Gesamtsumme der Nicht-Sauerstoffatome der Fritte, vorhanden sind.

2. Emailfritten mit einer Zusammensetzung gemäß Anspruch 1, dadurch gekennzeichnet, daß die Fritten 40 % und mehr Siliziumatome, 50 % und mehr Silizium- und Boratome, wobei der Anteil der Boratome 6,5 % nicht unterschreiten soll, 63 % und mehr Silizium-, Bor-und Natriumatome, wobei der Anteil der Natriumatome 7,5 % nicht unterschreiten soll, jeweils bezogen auf die Gesamtsumme der Nicht-Sauerstoffatome der Fritte, enthalten, der Anteil der übrigen Nicht-Sauerstoffatome 37 % und weniger ist, wobei 1,0 bis 1,2 % Kobaltatome sowie y Lithiumatome mit $6,3\ \% < y \leqq 20$ % und wenigstens x Fluoratome und höchstens 2x Fluoratome mit x = 15/(y-5), wobei der Anteil an Fluoratomen größer oder gleich 1 % und kleiner oder gleich 11 % ist, jeweils bezogen auf die Gesamtsumme der Nicht-Sauerstoffatome der Fritte, vorhanden sind.

3. Verwendung der Emailfritten gemäß Anspruch 1 oder 2 zur Herstellung säurefester Einschichtemaillierungen auf ungebeizten Stahlblechen mit sehr guter Haftung, dadurch gekennzeichnet, daß die Emailfritten in Gegenwart eines Hydrogen-Polysiloxans vermahlen, als Frittenpulver elektrostatisch aufgetragen und bei Temperaturen zwischen 790°C und 860°C gebrannt werden.

4. Verwendung der Emailfritten gemäß Anspruch 1 oder 2 zur Herstellung säurefester Einschichtemaillierungen auf ungebeizten Stahlblechen mit sehr guter Haftung, dadurch gekennzeichnet, daß die Emailfritten in Gegenwart von Wasser, Ton, Stellsalzen und Quarz vermahlen, diese Schlicker durch Spritzen oder Tauchen auf die Stahlbleche aufgebracht und bei Temperaturen oberhalb von 830°C gebrannt werden.

5. Verwendung der Emailfritten nach Anspruch 1 oder 2 für regenerative Wärmetauscher.

**Claims**

1. Enamel frits with the following composition:

| | | |
|---|---|---|
| $SiO_2$ | 25 to 65 | wt% |
| $B_2O_3$ | 5 to 30 | wt% |
| $Na_2O$ | 5 to 25 | wt% |
| $Li_2O$ | 2.5 to 10 | wt% |
| F | 0.3 to 4 | wt% |
| CoO | 1.5 to 2.5 | wt% |
| $K_2O$ | 0 to 12 | wt% |
| MgO | 0 to 2 | wt% |
| CaO | 0 to 16 | wt% |
| BaO | 0 to 26 | wt% |
| $Al_2O_3$ | 0 to 10 | wt% |
| $TiO_2$ | 0 to 14 | wt% |
| $ZrO_2$ | 0 to 16 | wt% |
| NiO | 0 to 3 | wt% |
| CuO | 0 to 3 | wt% |
| MnO | 0 to 3 | wt% |
| $Fe_2O_3$ | 0 to 3 | wt% |
| $MoO_3$ | 0 to 1 | wt% |
| ZnO | 0 to 3 | wt% |

characterized in that the frits contain 40 % or more silicon atoms, 50 % or more silicon and boron atoms, the proportion of boron atoms having not to fall below 6.5 %, 63 % or more silicon, boron and sodium atoms, the proportion of sodium atoms having not to fall below 7.5 %, in each case relative to the total of non-oxygen atoms of the frit, and the proportion of the remaining nonoxygen atoms is 37 % or less, 1.0 to 1.2 % cobalt atoms being present as well as x fluorine atoms, with 1 % $\leq$ x $\leq$ 11 %, and at least y and no more than 2y lithium atoms, with y = (15/x) + 5, the proportion of lithium atoms being greater than 6.3 % and less than or equal to 20 %, relative in each case to the total of non-oxygen atoms of the frit.

2. Enamel frits with a composition according to Claim 1, characterized in that the frits contain 40 % or more silicon atoms, 50 % or more silicon and boron atoms, the proportion of boron atoms having not to fall below 6.5 %, 63 % or more silicon, boron and sodium atoms, the proportion of sodium atoms having not to fall below 7.5%, relative in each case to the total of non-oxygen atoms of the frit, and the proportion of the remaining non-oxygen atoms is 37 % and less, 1.0 to 1.2 % cobalt atoms being present as well as y lithium atoms, with 6.3 % < y $\leq$ 20 %, and at least x and no more than 2x fluorine atoms, with x = 15/(y-5), the proportion of fluorine atoms being greater than or equal to 1 % and less than or equal to 11%, relative in each case to the total of non-oxygen atoms of the frit.

3. The use of the enamel frits according to Claim 1 or 2 for production of acid-resistant single-layer enamelling on non-pickled steel sheets with very good adhesion, characterized in that the enamel frits are ground in presence of a hydrogen polysiloxane, applied electrostatically as frit powder and fired at temperatures between 790 and 860 °C.

4. The use of the enamel frits according to Claim 1 or 2 for production of acid-resistant single-layer enamelling on non-pickled steel sheets with very good adhesion, characterized in that the enamel frits are ground in presence of water, clay, setting-up salts and quartz, and these slips are applied to the steel sheets by spraying or dipping and fired at temperatures above 830 °C.

5. The use of the enamel frits according to Claim 1 or 2 for regenerative heat exchangers.

**Revendications**

1. Frittes d'émail de composition suivante :

$$SiO_2 \quad\quad 25 \text{ à } 65 \text{ % en poids}$$
$$B_2O_3 \quad\quad 5 \text{ à } 30 \text{ % en poids}$$
$$Na_2O \quad\quad 5 \text{ à } 25 \text{ % en poids}$$
$$Li_2O \quad\quad 2,5 \text{ à } 10 \text{ % en poids}$$
$$F \quad\quad 0,3 \text{ à } 4 \text{ % en poids}$$
$$CoO \quad\quad 1,5 \text{ à } 2,5 \text{ % en poids}$$
$$K_2O \quad\quad 0 \text{ à } 12 \text{ % en poids}$$
$$MgO \quad\quad 0 \text{ à } 2 \text{ % en poids}$$
$$CaO \quad\quad 0 \text{ à } 16 \text{ % en poids}$$
$$BaO \quad\quad 0 \text{ à } 26 \text{ % en poids}$$
$$Al_2O_3 \quad\quad 0 \text{ à } 10 \text{ % en poids}$$
$$TiO_2 \quad\quad 0 \text{ à } 14 \text{ % en poids}$$
$$ZrO_2 \quad\quad 0 \text{ à } 16 \text{ % en poids}$$
$$NiO \quad\quad 0 \text{ à } 3 \text{ % en poids}$$
$$CuO \quad\quad 0 \text{ à } 3 \text{ % en poids}$$
$$MnO \quad\quad 0 \text{ à } 3 \text{ % en poids}$$
$$Fe_2O_3 \quad\quad 0 \text{ à } 3 \text{ % en poids}$$
$$MoO_3 \quad\quad 0 \text{ à } 1 \text{ % en poids}$$
$$ZnO \quad\quad 0 \text{ à } 3 \text{ % en poids,}$$

caractérisées en ce qu'elles contiennent 40 % et plus d'atomes de silicium, 50 % et plus d'atomes de silicium et de bore, la proportion des atomes de bore ne devant pas s'abaisser en dessous de 6,5 %, 63 % et plus d'atomes de silicium, de bore et de sodium, la proportion des atomes de sodium ne devant pas s'abaisser en dessous de 7,5 %, dans chaque cas par rapport au total des atomes de la fritte autres que des atomes d'oxygène, la proportion des autres atomes étrangers à l'oxygène étant égale ou inférieure à 37 %, 1,0 à 1,2 % des atomes de cobalt ainsi que x atomes de fluor, avec 1 % $\leqq$ x $\leqq$ 11 % et au moins y atomes de lithium et au maximum 2y atomes de lithium avec y = (15/x) + 5 étant présents, la proportion d'atomes de lithium étant supérieure à 6,3 % et inférieure ou égale à 20 %, dans chaque cas par rapport au total des atomes de la fritte autres que les atomes d'oxygène.

2. Frittes d'émail de composition suivant la revendication 1, caractérisées en ce qu'elles contiennent 40 % et plus d'atomes de silicium, 50 % et plus d'atomes de silicium et de bore, la proportion des atomes de bore ne devant pas s'abaisser en dessous de 6,5 %, 63 % et plus d'atomes de silicium, bore et sodium, la proportion des atomes de sodium ne devant pas s'abaisser en dessous de 7,5 %, dans chaque cas par rapport au total des atomes de la fritte autres que des atomes d'oxygène, la proportion des autres atomes étrangers à l'oxygène étant égale ou inférieure à 37 %, 1,0 à 1,2 % d'atomes de cobalt ainsi que y atomes de lithium, avec 6,3 % < y $\leqq$ 20 % et au minimum x atomes de fluor et au maximum 2x atomes de fluor avec x = 15/(y-5) étant présents, la proportion d'atomes de fluor étant supérieure ou égale à 1 % et inférieure ou égale à 11 %, dans chaque cas par rapport au total des atomes de la fritte autres que des atomes d'oxygène.

3. Utilisation des frittes d'émail suivant la revendication 1 ou 2 pour la production d'émaillages mono-couches résistants aux acides sur tôles d'acier non décapées avec une très bonne adhérence, caractérisée en ce que les frittes d'émail sont broyées en présence d'un hydrogénopolysiloxane, appliquées par voie électrostatique sous forme de poudre et cuites à des températures comprises entre 790°C et 860°C.

4. Utilisation des frittes d'émail suivant la revendication 1 ou 2 pour la production d'émaillages mono-couches résistants aux acides sur tôles d'acier non décapées avec une très bonne adhérence, caractérisée en ce que les frittes d'émail sont broyées en présence d'eau, d'argile, de sels stabilisants et de quartz, ces barbotines sont appliquées par pulvérisation ou par immersion sur les tôles d'acier et elles sont cuites à des températures au-dessus de 830°C.

5. Utilisation des frittes d'émail suivant la revendication 1 ou 2 pour des échangeurs de chaleur à régénération.